# EUROPEAN PATENT APPLICATION

(11) **EP 2 034 598 A1**
(43) Date of publication of application: **11.03.2009**
(21) Application number: 07743123.7
(22) Date of filing: 10.05.2007
(51) Int. Cl.: H02M 5/293

(54) **SWITCHING PATTERN CREATING METHOD FOR AC-AC DIRECT CONVERSION DEVICE**

(30) Priority: 10.05.2006 JP 2006131036; 10.05.2006 JP 2006131037
(71) Applicant: Meidensha Corporation, Tokyo 141-0032 (JP)
(72) Inventor: TADANO, Yugo, Shinagawa-ku, Tokyo 141-0032 (JP)
(74) Representative: Manitz, Finsterwald & Partner GbR
(86) International application number: PCT/JP2007/059688
(87) International publication number: WO 2007/129755

(57) **Abstract**

[Object] A switching pattern is created, which reduces the number of times of switching of a bidirectional switch at a time of an inter-sector shift and reduces a common mode voltage.

[Means to solve] A zero-voltage is set with an intermediate voltage phase of an input phase voltage in an AC-AC direct conversion circuit being the reference, and a switching pattern of a zero-voltage vector is determined with an input space vector divided into twelve. When an input current command vector shifts between sectors in a space vector of an input side, or when an output voltage command vector shifts between sectors in a space vector of an output side, the switching of the bidirectional switch is performed by one phase. A switching table is changed by using degree of freedom of a combination of the zero-voltage vector. Under a steady operating condition, the sector of the space vector that shifts next is limited to five patterns and predicted them previously, and the pattern is changed in advance to the shift so that a simultaneous switching of two phases or more can be prevented. In a case of the simultaneous switching of two phases or more at a duty update timing, the duty update at that instant is postponed, and the duty update is performed in a next different switch state.

## Description

### TECHNICAL FIELD

The present invention relates to an AC-AC direct conversion device (a matrix converter) that converts voltage or frequency which is input from a single-phase or multi-phase AC power source to arbitrary voltage or frequency and outputs it, and particularly to a switching pattern creating method to control each bidirectional switch by a switching pattern obtained by synthesizing the following patterns; a switching pattern which a virtual input converter creates by combining base vectors of 2n by which mutually different arbitrary input phases are connected to a P-side and an N-side of a virtual DC link and zero-voltage vectors of n by which same phases are connected to the P-side and N-side, and a switching pattern which a virtual output inverter creates by using 2+2n variety of base vectors including two zero-voltage vectors.

### BACKGROUND ART

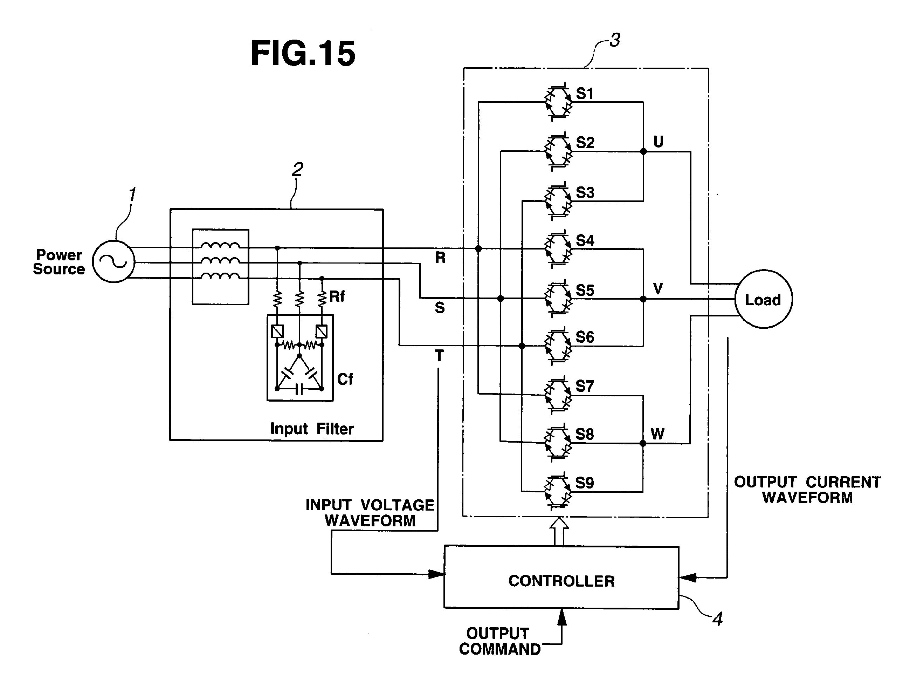

This kind of AC-AC direct conversion device previously existing is a conversion device which quickly switches a bidirectional switch having self arc-extinguishing type semiconductor elements and converts a single-phase or multi-phase AC input to a power of arbitrary voltage or frequency, and its basic configuration is shown in Fig. 15. An input filter 2 and an AC-AC direct conversion circuit 3 of a configuration of bidirectional switches S1 ∼ S9 are installed to each phase of R, S, T of a three-phase AC power source 1, and by PWM-controlling the each bidirectional switch at a much higher frequency than a power supply frequency by a controller 4, an AC output of U, V, W controlled to arbitrary voltage or frequency is obtained while directly applying an input voltage to a load such as a motor.

Regarding the switching pattern of the bidirectional switch in AC-AC direct conversion device, for example in a case of a carrier amplitude modulation, it is determined by an AND condition between a PWM converter pattern that is a signal synchronized with the input voltage and a PWM inverter pattern that is created according to an output frequency and voltage. With this pattern determination, an input current of the AC-AC direct conversion device is controlled by the PWM converter pattern, and the output voltage and frequency are controlled by the PWM inverter pattern, and a conversion of the input current to a sinusoidal wave, a conversion of an output waveform to the sinusoidal wave and a frequency conversion operation are simultaneously realized while an input power factor is being held at "1". Here, with respect to the bidirectional switch, there is a case where the bidirectional switch is configured using a plurality of unidirectional switches as shown in the drawing.

With regard to a controlling method of the AC-AC direct conversion device, when broadly classifying the method, there are two methods of a virtual DC link type and an AC-AC direct type. The virtual DC link method is a method that is devised so that a DC link is virtually considered and a virtual input converter and a virtual output inverter can be separately controlled, and this is similar to a configuration of a conventional current-fed PWM converter + voltage-fed PWM inverter, then an idea of the control is easy. Meanwhile, there is a constraint in which such six switching patterns that each phase of an input side and each phase of an output side are connected at all different phases at 1 : 1 are not produced. In the case of the AC-AC direct type, although there is no constraint in the above switching patterns, an algorithm generally tends to be complicated.

Regarding an approach of creating a PWM pattern, there are mainly a carrier comparison approach and a space vector modulation approach. The carrier comparison approach is an approach that creates the PWM pattern by comparison of magnitude between a triangular wave carrier and a sinusoidal wave. As the carrier comparison approach applied to the virtual DC link method, an approach has been proposed, which reduces the number of times of switching of the switch in the PWM control and reduces a switching loss and noises at the same number of times of the switching and further improves control accuracy of the output voltage by creating a carrier of the virtual input converter and a carrier of the virtual output inverter from a virtual PWM pulse (for example, Patent Document 1).

The space vector modulation approach is an approach that selects an instantaneous space current vector in accordance with a switching state of the each bidirectional switch of the AC-AC direct conversion device, and the switching pattern is determined by this selection. A method adopting this space vector modulation approach has been also proposed (for example, Non-Patent Document 1). In this space vector modulation approach, by selecting a proper switching pattern, the number of times of switching of the switch can be reduced, and the switching loss can be reduced, and further a load current change can be lowered then distortion of the output voltage can be reduced.

Further, a methodology adopting the space vector modulation approach in the virtual DC link method is also published (for example, Non-Patent Document 2).

Patent Document 1: Japanese Patent Application Kokai Publication No. 2005-168198

Non-Patent Document 1: "An Analysis Method of AC-AC Direct Converters" The journal of The Institute of Electrical Engineers of Japan, SPC97-53 This document has been disclosed in Japan.

Non-Patent Document 2: "Space Vector Modulated Three-Phase to Three-phase Matrix Converter with Input Power Factor Correction" L. Huver et al. IEEE trans. On IndustryApplications, vol. 31, No. 6, 1995 This document has been disclosed in US.

### DISCLOSURE OF THE INVENTION

### PROBLEMS SOLVED BY THE INVENTION

As described above, an adoption of the carrier comparison approach or the space vector modulation approach for creating the PWM pattern of the AC-AC direct conversion device has been proposed in the above Patent Document 1 or Non-Patent Documents 1, 2.

However, Patent Document 1 is a case where the carrier comparison approach is adopted for the creation of the PWM pattern, and since an allocation order of the PWM pulse cannot be determined in this carrier comparison approach, this cannot be applied to the space vector modulation approach.

Further, Non-Patent Document 1 is a case where the space vector modulation approach is adopted to the AC-AC direct conversion device of the AC-AC direct type. However, this cannot be applied to the AC-AC direct conversion device of the virtual DC link type.

Furthermore, in Non-Patent Document 2, PWM-controlling the bidirectional switch by the space vector modulation approach in the AC-AC direct conversion device of the virtual DC link type has been proposed. However, no mention has been made of a connection state at the switching of the switch, and there is a possibility that a harmonic noise and the number of times of switching of the switch will increase, depending on the switching pattern.

An object of the present invention to provide a switching pattern creating method in which the virtual input converter creates the switching pattern by combining six base vectors and three zero-voltage vectors and the virtual output inverter creates the switching pattern with eight variety of base vectors including two zero-voltage vectors and then the each bidirectional switch is PWM-controlled by the switching pattern obtained by synthesizing the respective switching patterns of the virtual input converter and the virtual output inverter in the AC-AC direct conversion device, and which has excellent performance in the reduction of the harmonic noise and the number of times of switching of the switch.

The present invention for solving this problem features the following methods.

(1) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: selecting the switching pattern of the zero-voltage vector so that one phase is not changed at any time in an arbitrary switching cycle, for the synthesized switching pattern; and bringing this state closer to a two phase modulation state.

(2) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: setting a duty pulse of current and voltage space vectors, which performs a PWM control at the command of a duty of the each base vector, to an allocation order in which the two or more bidirectional switches are not simultaneously switched.

(3) The zero-voltage vector is determined from input sector information, and the allocation order is determined according to even number/odd number judge information of input and output sector information.

(4) The allocation order of the duty command pulse is reversed every update timing of the duty command.

(Second problem and its solving method)

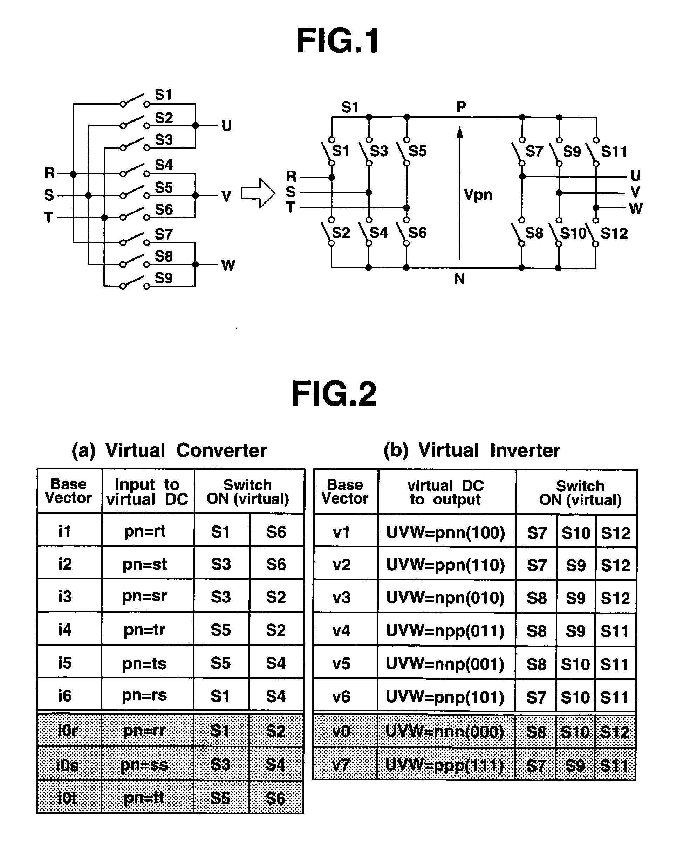

With regard to the control method of the AC-AC direct conversion device of the virtual DC link type, as shown in Fig. 1, a conversion circuit that is originally configured by a set of nine switches S1 ∼ S9 is regarded as a combination of a set of twelve switches S1 ∼ S12 of the virtual input converter and the virtual output inverter.

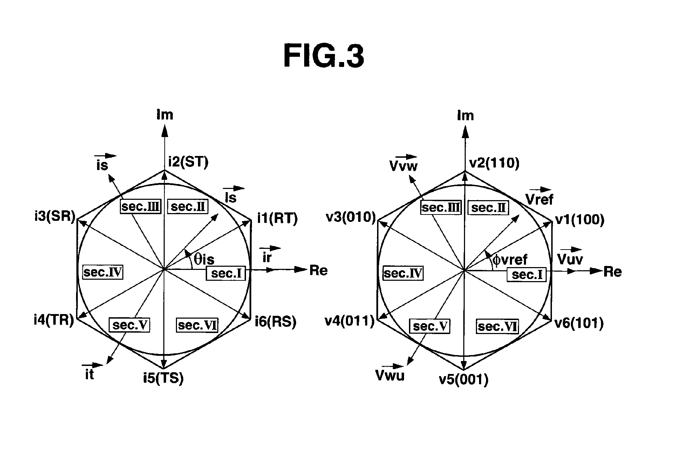

With respect to the switching pattern of these switches S1 ∼ S12, as shown in a table in Fig. 2, in the virtual input converter, six patterns (Base Vector: base vectors i1 ∼ i6) by which mutually different arbitrary input phases are connected to the P-side and the N-side of the virtual DC link, and three patterns (i0r, i0s, i0t) of a zero-voltage vector condition by which same phases are connected to the P-side and N-side, are present. On the other hand, in the virtual output inverter, eight variety of space vectors (v0 ∼ v7) including two zero-voltage vector conditions are present. Here, space vector sectors and base vectors of the input and output are defined as shown in Fig. 3. In Fig. 3, the virtual input converter is shown with an input phase current vector Is being the reference, and the virtual output inverter is shown with an output line voltage vector Vref being the reference, and the both are represented as a vector that rotates in a counterclockwise direction.

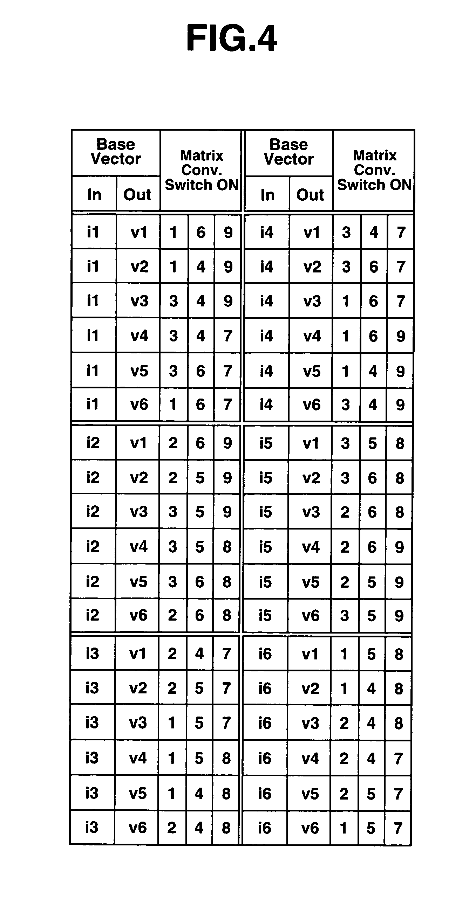

Next, regarding the combination of the defined base vectors of the input side and output side, from a relationship between input RST phases and output UVW phases which are connected via the P, N of the virtual DC link, when compared with the original switches S1 ∼ S9 of the AC-AC direct conversion device, synthesized switching patterns can be obtained as shown in a table in Fig. 4.

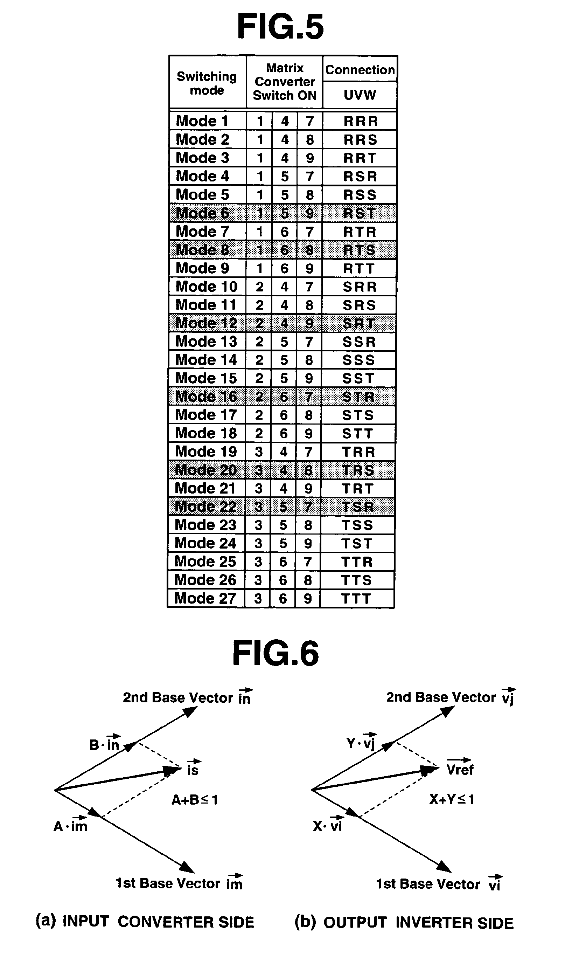

For the AC-AC direct conversion device, because an input power source must never be shorted and a current path of an output inductive load must be secured, there is a constraint in which the switching pattern is considered as three combinations of the switches S1, S2, S3 and switches S4, S5, S6 and switches S7, S8, S9 which are grouped into three by the output phase then the switch that turns an ON-state is limited to only one switch in the each group. Therefore, all switching patterns of three phases/three phases direct conversion are limited to twenty-seven patterns as shown in a table in Fig. 5, and they are defined as modes 1 - 27. However, in the case of the virtual DC link type, modes 6, 8, 12, 16, 20, 22 are not produced.

By the synthesized result shown in the table in Fig. 4, the PWM control is performed according to a duty of the each base vector, and the current and voltage space vectors are represented on average at a switching cycle. An allocation method of a duty pulse within this switching cycle will be explained. Fig. 6 is a drawing of a relationship between the vectors of the input and output and the duty. A duty of a first base vector of the input is denoted as A, a duty of a second base vector of the input is denoted as B, a duty of a first base vector of the output is denoted as X, and a duty of a second base vector of the output is denoted as Y. In the case of the virtual DC link type, duty commands of these input and output are synthesized and a final duty command is produced. That is, by crossing the each duty, four duty commands of AX, AY, BX, BY are produced. Further, a zero-voltage vector duty is denoted as Z, and Z is predetermined by an expression Z = 1- (AX+AY+BX+BY). Pulses of these five synthesized duty commands are positioned in an arbitrary order during a period of a duty operation cycle T (corresponding to a carrier frequency in the carrier comparison approach), and the PWM control is performed.

The allocation order of these five on-duty pulses within the operation cycle can be any order for the PWM control itself, but it is preferable to determine the order with consideration given to a switching of the allocated duty pulse, the reduction of the number of times of switching of the switch, the reduction of the harmonics and a reduction of a common mode voltage. From such a consideration, switching tables that can reduce the number of times of switching of the switch have been proposed in various documents.

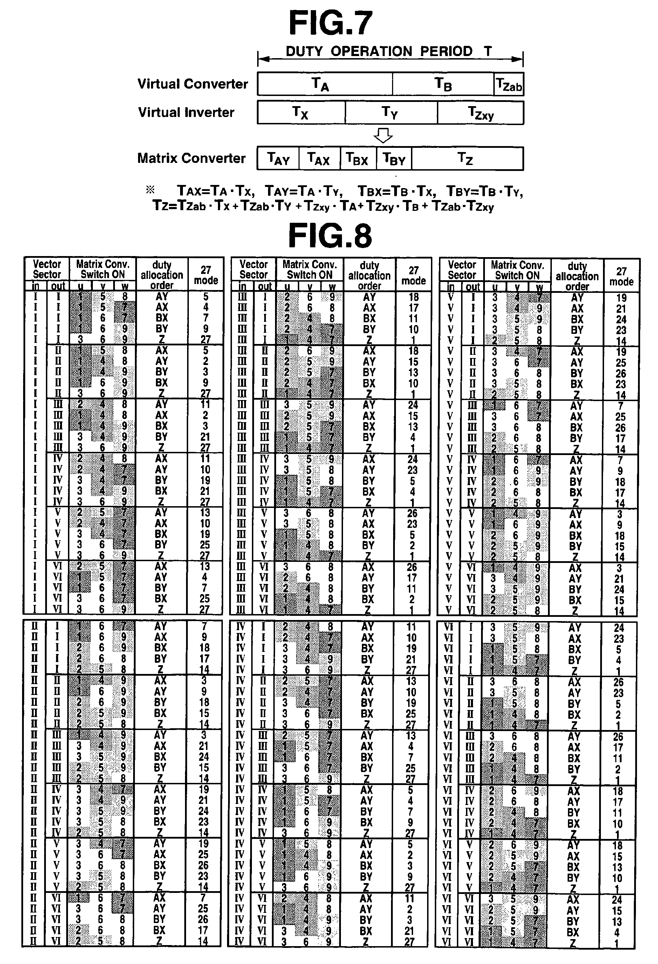

For instance, in the above mentioned Patent Document 1, by a control method by a triangular wave carrier modulation by the virtual DC link method of the AC-AC direct conversion circuit, the number of times of switching of the switch in the PWM control is reduced and the reduction of the loss and noise is performed. Further, as mentioned later, the present invention has proposed a switching table, as shown in a table in Fig. 8, where the switching of the switch is not simultaneously performed at two phases or more, but the switching is performed surely by one phase. In the table in Fig. 8, number (1 ∼ 9) of each phase denotes the ON-state of the respective switches S1 ∼ S9 in the AC-AC direct conversion device shown on a left-hand side in Fig. 1. And each sector discrimination of the input and output follows Fig. 3. Further, a combination of the synthesized duty and the switch state can be derived by the synthesis in the virtual converter. Furthermore, in each input and output sector combination, the pulse allocation order of the synthesized duty is presented. As an example, in a case of an input sector I and an output sector I, a switch order is ··· → AY → AX → BX → BY → Z → Z → BY → BX → AX → AY → AX → ··· i.e. it is symmetrically reversed, then the switching of the switch is performed. An update of the duty command is performed at a reverse point. Moreover, the switching order of the switch and a selection of the switch at the zero-voltage are determined so that the number of times of switching of the switch becomes a minimum within its control cycle. At the time of the switching of the duty pulse, the switching of the switch is not simultaneously performed at two phases or more.

However, in the space vector shown in Fig. 3, in a case of a fixed table such as the table in Fig. 8, there is a possibility that the switches of two phases or more will be simultaneously switched at the instant when a state of the input sector where an input current command vector exists or a state of the output sector where an output voltage command vector exists shifts. In addition, consideration concerning the reduction of the common mode voltage has not been given clearly.

Another obj ect of the present invention to provide a switching pattern creating method in which, besides optimization of the switching table in the above steady state, the number of times of switching of the switch at the time of the inter-sector shift can be reduced and the common mode voltage can be reduced.

The present invention for solving this problem features the following methods.

(5) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: setting the zero-voltage vector with an intermediate voltage phase of an input phase voltage (a power supply phase voltage) of an AC-AC direct conversion circuit being the reference; and determining the switching pattern of the zero-voltage vector to reduce a common mode voltage with an input space vector divided into twelve.

(6) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: performing a switching of the bidirectional switch by one phase when an input current command vector shifts between sectors of a space vector on an input side or when an output voltage command vector shifts between sectors of a space vector on an output side, for preventing a simultaneous switching of two phases or more.

(7) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: changing a switching table according to a transition state which switches the bidirectional switch, by using degree of freedom of a combination of the zero-voltage vector, for preventing a simultaneous switching of two phases or more at a time of an inter-sector shift.

(8) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: previously limiting a sector of the base vector, which shifts next, to five patterns and then predicting the five patterns under a steady operating condition; and changing a present pattern in advance to such a switching state of the switch that a simultaneous switching of the bidirectional switch at two phases or more can be prevented when shifting to the five patterns.

(9) A method for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprises: when the bidirectional switch is in a state in which two or more phases are simultaneously switched at a timing when an arbitrary duty is updated between sectors, postponing the update of the duty of that instant; and performing the update of the duty at a next update timing in a state of the bidirectional switch in which the two or more phases are not simultaneously switched, for preventing the simultaneous switching of the switch.

### EFFECTS OF THE INVENTION

As described above, according to the present invention, in the AC-AC direct conversion device of n phases that controls the each bidirectional switch by the switching pattern synthesized by the following patterns; the switching pattern which the virtual input converter creates by combining the base vectors of 2n by which the mutually different arbitrary input phases are connected to the P-side and the N-side of the virtual DC link and the zero-voltage vectors of n by which the same phases are connected to the P-side and N-side, and the switching pattern which the virtual output inverter creates by using 2+2n variety of space vectors including two zero-voltage vectors, the excellent switching pattern that can reduce the distortion of the output voltage and the switching loss through the reduction of the harmonic noise and the number of times of switching of the switch, can be create.

Further, according to the present invention, besides the optimization of the switching table in the steady state, the switching pattern which reduces the number of times of switching of the switch at the time of the inter-sector shift and reduces the common mode voltage, can be created.

### DESCRIPTION OF THE PREFERRED EMBODIMENTS

(Basic explanation of control method)

With regard to the control method of the AC-AC direct conversion device of the virtual DC link type, as shown in Fig. 1, the conversion circuit that is originally configured by the set of nine switches S1 ∼ S9 is regarded as the combination of the set of twelve switches S1 ∼ S12 of the virtual input converter and the virtual output inverter.

With respect to the switching pattern of these switches S1 ∼ S12, as shown in the table in Fig. 2, in the virtual input converter, the six patterns (Base Vector: base vectors i1 ∼ i6) by which mutually different arbitrary input phases are connected to the P-side and the N-side of the virtual DC link, and the three patterns (i0r, i0s, i0t) of the zero-voltage vector condition by which same phases are connected to the P-side and N-side, are present. On the other hand, in the virtual output inverter, the eight variety of base vectors (v0 ∼ v7) including the two zero-voltage vector conditions are present. Here, the space vector sectors and base vectors of the input and output are defined as shown in Fig. 3. In Fig. 3, the virtual input converter is shown with an input current command (the input phase current) vector Is being the reference, and the virtual output inverter is shown with an output voltage command (the output line voltage) vector Vref being the reference, and the both are represented as the vector that rotates in the counterclockwise direction.

Next, regarding the combination of the defined base vectors of the input side and output side, from the relationship between the input RST phases and the output UVW phases which are connected via the P, N of the virtual DC link, when compared with the original switches S1 ∼ S9 of the AC-AC direct conversion device, the synthesized switching patterns can be obtained as shown in the table in Fig. 4.

Further, for the AC-AC direct conversion device, because the input power source must never be shorted and the current path of the output inductive load must be secured, there is the constraint in which the switching pattern is considered as three combinations of the switches S1, S2, S3 and switches S4, S5, S6 and switches S7, S8, S9 which are grouped into three by the output phase then the switch that turns the ON-state is limited to only one switch in the each group. Therefore, all switching patterns of three phases/three phases direct conversion are limited to twenty-seven patterns as shown in the table in Fig. 5, and they are defined as the modes 1 ∼ 27. However, in the case of the virtual DC link type, the modes 6, 8, 12, 16, 20, 22 are not produced.

By the synthesized result shown in the table in Fig. 4, the PWM control is performed according to the duty of the each base vector, and the current and voltage space vectors are represented on average at the switching cycle. The allocation method of the duty pulse within this switching cycle will be explained. Fig. 6 is the drawing of the relationship between the vectors of the input and output and the duty. The duty of the first base vector of the input is denoted as A, the duty of the second base vector of the input is denoted as B, the duty of the first base vector of the output is denoted as X, and the duty of the second base vector of the output is denoted as Y. In the case of the virtual DC link type, the duty commands of these input and output are synthesized and the final duty command is produced. That is, by crossing the each duty, the four duty commands of AX, AY, BX, BY are produced. Further, as shown in Fig. 7, a post-synthesis zero-voltage vector Z is determined, and each pulse generation period in one switching cycle is defined.

(Embodiment 1)

In the AC-AC direct conversion device, due to the prevention of the input phase short, the control must be performed so that only one switch turns ON in each of the three groups of the group (U phase) of switches S1, S2, S3 and the group (V phase) of switches S4, S5, S6 and the group (W phase) of switches S7, S8, S9. The total combination of the three switches, each of which turns the ON-state, is the twenty-seven patterns, as previously mentioned in the table in Fig. 5.

Here, a case where the input vector sector defined in Fig. 3 is "I" and the output vector sector defined in Fig. 3 is also "I" will be explained as an example. Because of the input sector I, the input first base vector becomes i6, and the input second base vector becomes i1. On the other hand, since the output sector is also I, the output first base vector becomes v6, and the output second base vector becomes v1. Therefore, from the table in Fig. 5, the combinations of the switch connection state of U, V, W phase are "1, 5, 7", "1, 5, 8", "1, 6, 7" and "1, 6, 9", and the relationship with the duty command (AX, AY, BX, BY) is "1, 5, 7" = AX, "1, 5, 8" = AY, "1, 6, 7" = BX, and "1, 6, 9" = BY. Further, the switching state of the remaining zero-voltage vector command Z can be any of three of "1, 4, 7", "2, 5, 8" and "3, 6, 9".

Hence, in the present embodiment, as a method for selecting the zero-voltage vector command, the zero-voltage vector command is selected according to a switch remaining unchanged in the ON-state while checking the other four duty commands. That is, in the above example of the combination of the sector "I-I", since the switch "1" is ON at all times, the combination of "1, 4, 7" is selected as the zero-voltage vector, and the pattern is determined so that "1" is always ON in its sector. Also in the other sector states, since it is possible to select such combination that the one phase is not switched, the zero-voltage vector can be changed in accordance with the sector state of the input and output. This is analogous to a state in which a two phase modulation is performed, when applied to a common inverter control.

Consequently, in the present embodiment, by selecting the switching pattern of the zero-voltage vector so that the one phase is not changed at any time in an arbitrary switching cycle, and by bringing it closer to the two phase modulation state that is capable of performing the control even no switching of the switch for the one phase, the number of times of switching of the switch is reduced.

(Embodiment 2)

The table in Fig. 8 shows the space vector sectors of the input and output and five synthesized duty allocation orders of one-side of nine section symmetrical allocation in the each input and output sector combination. As an example, in the case of the input sector I and the output sector I, this means that the nine sections are symmetrically ordered in an order of AY → AX → BX → BY → Z → BY → BX → AX → AY. However, practically, a repetition of five sections + five sections is performed with Z divided into two, and also the duty update is performed at a timing of every five sections.

As an explanation of the table in Fig. 8, an example of the case where the input vector sector is "I" and the output vector sector is also "I", same as the embodiment 1, will be explained. The switching state of the switch of the U phase, V phase and W phase in this case is five sets of "1, 5, 8", "1, 5, 7", "1, 6, 7", "1, 6, 9" and the zero-voltage vector "3, 6, 9". When connecting this switching state with the five variety of duty commands, "1, 5, 8" = AY, "1, 5, 7" = AX, "1, 6, 7" = BX, "1, 6, 9" = BY and "3, 6, 9" = Z. In the table in Fig. 8, this order is shown in a box of the sector "I-I", and this means that the each duty command and also the switching order of the switch follow this order.

In the present embodiment, unlike the embodiment 1, a zero-phase vector "3, 6, 9" is selected and the switching order of the switch is set to AY → AX → BX → BY → Z. When focusing attention on the switching of the bidirectional switch in the table in Fig. 8, it is found that such order that two or more switches are not simultaneously switched is determined. The combination of the sector "I-I" is "1, 5, 8" → "1, 5, 7" → "1, 6, 7" → "1, 6, 9" → "3, 6, 9", and the switch that changes is only one switch at any switching time.

Consequently, in the present embodiment, the pulse allocation order is set (or the table is set) so that the two or more bidirectional switches are not simultaneously switched at the time of the switching of the duty command pulse. With this setting, an influence of the harmonic noise caused by the simultaneous switching of the two phases or more can be reduced, and the number of times of switching of the switch in one switching cycle can be reduced.

(Embodiment 3)

According to the method of the above embodiment 2, the simultaneous switching of the switch in one switching cycle in an arbitrary sector can be prevented. However, in Fig. 8, when focusing attention on a relationship between the combination of the input and output sectors and the switching order of the switch and also a selection state of the zero-voltage vector in the table, a certain rule exists. That is, it is found that, the zero-voltage vector can be determined from only input sector information, and the switching order of the switch is two patterns of "AY → AX → BX → BY → Z" or "AX → AY → BY → BX → Z", and this switching method judges that the input and output sectors are "even number" or "odd number", then if the combination is "even · even" and "odd · odd", the switching order is "AY → AX → BX → BY → Z", and if combination is "even · odd" and "odd · even", the switching order is "AX → AY → BY → BX → Z".

Hence, in the present embodiment, without completely developing a table such as the table in Fig. 8, the duty command pulse allocation order can be logically determined from the input and output sector state.

Consequently, in the present embodiment, by determining the zero-voltage vector from the input sector information without completely developing the table of the embodiment 2, and by determining the allocation order from the even number · odd number judge information of the input and output sectors information, a control speed can be improved with the less development of the table, along with the effects of the embodiment 2.

(Embodiment 4)

In the case of the pulse allocation order of the above embodiment 2 or embodiment 3, the switching of the switch does not occur twice or more simultaneously in one switching cycle. However, if the sector becomes the same sector repeatedly and the next switching cycle starts, for example, the switching order becomes "AY → AX → BX → BY → Z → AY → AX → BX → BY → Z··· " "and it is not always possible to prevent the simultaneous switching of the switch upon the shift of second cycle at "Z → AY" of this switching order. As an example, in the case of the combination of the input and output sectors "I-I", from the table in Fig. 8, since the switching of "Z → AY" is "3, 6, 9" → "1, 5, 8", all the three switches are simultaneously operated. This causes the occurrence of the harmonics and the increase of the.number of times of switching of the switch and loss, and it is unfavorable.

Hence, in the present embodiment, the pulse allocation order is reversed then repeated every update timing of the duty command. That is, the pulse allocation order is repeated in such an order as "AY → AX → BX → BY → Z → Z → BY → BX → AX → AY → AY → AX ··· " while being reversed.
Consequently, in the present embodiment, bearing in mind that the switching cycle is repeated at the same sector, the duty command pulse allocation order is reversed every duty command update timing. With this allocation order, the reduction of the number of times of switching of the switch and the harmonics can be realized without bringing about the problem in which the switch is simultaneously switched, even in the case where the switching cycle is repeated, along with the effects of the embodiments 2 and 3.

(Embodiment 5)

When the switching table is controlled with the table fixed as shown in the table in Fig. 8, the number of times of switching of the switch in one operating cycle in the same sector can be minimized. In the embodiment shown in the table in Fig. 8, in each combination of the arbitrary input and output sectors, although the switching pattern of the zero-phase Z is fixed, as the degree of freedom, there are three sets of "1, 4, 7", "2, 5, 8" and "3, 6, 9" for the combination of the switching of the switch of the zero-voltage vector (the each number means the ON-state of the respective switches S1 ∼ S9 in the AC-AC direct conversion circuit in Fig. 1). Therefore, the table is actually not necessarily fixed as shown in the table in Fig. 8. Hence, in the present embodiment, by using this degree of freedom of the combination of the zero-voltage vector, the common mode voltage is reduced.

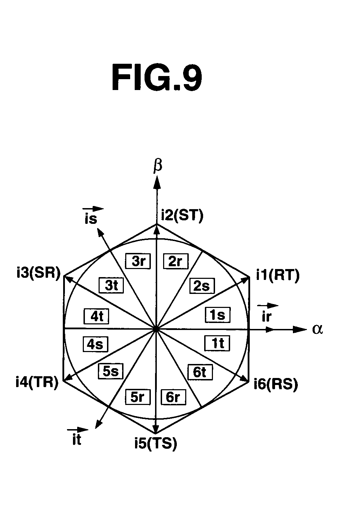

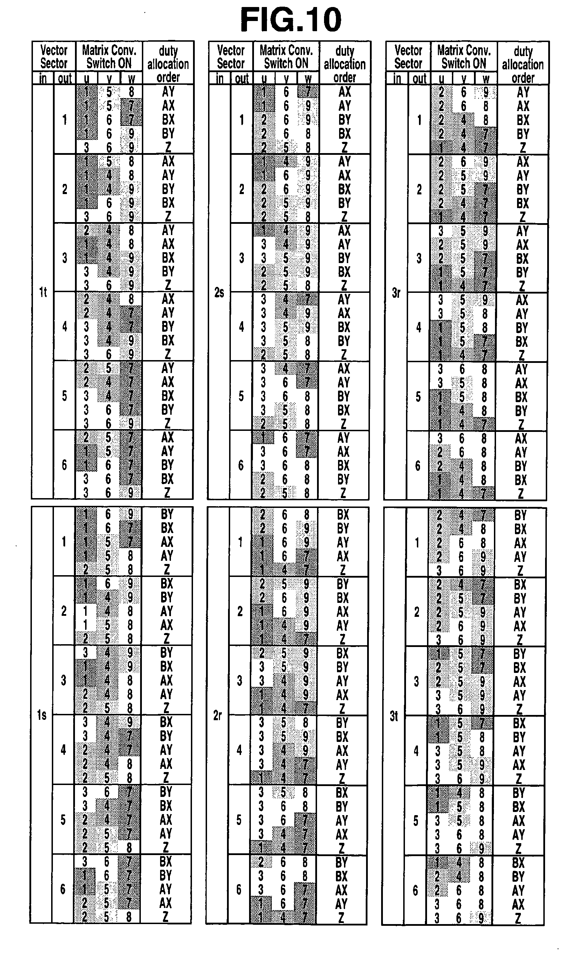

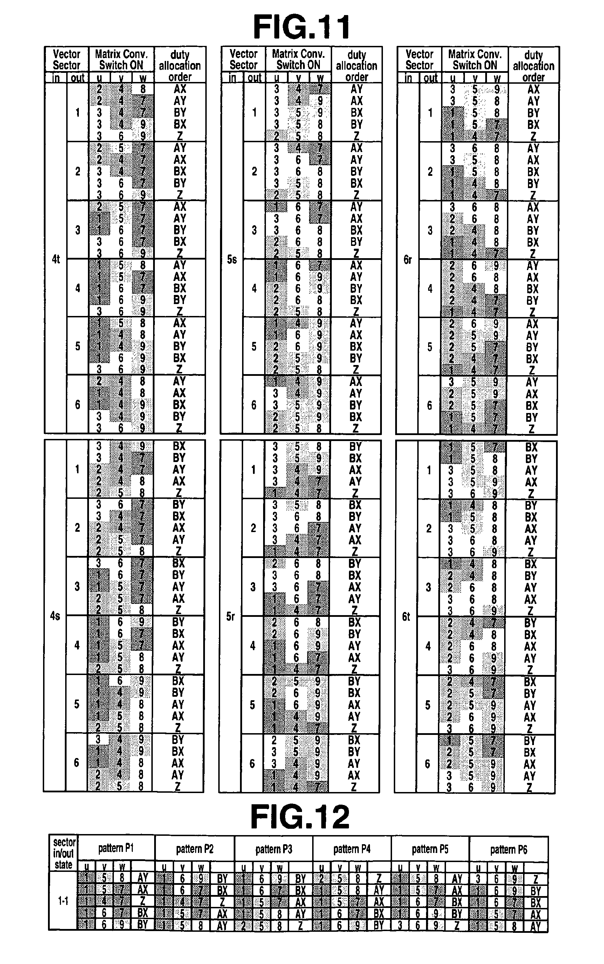

By focusing attention on three phase instantaneous values of an input phase voltage (a power supply phase voltage) of the AC-AC direct conversion circuit, the relationship of the magnitude of large/middle/small of the instantaneous values is detected. In order to reduce the common mode voltage, it is preferable that the zero-voltage vector be set with an intermediate voltage phase (a phase of "middle" of the relationship of the magnitude of large/middle/small of the instantaneous values), which can reduce a voltage drop, being the reference, when generating the output line voltage vector by the PWM. That is, if the input intermediate voltage phase is R phase, the combination is "1, 4, 7", if the input intermediate voltage phase is S phase, the combination is "2, 5, 8", and if the input intermediate voltage phase is T phase, the combination is "3, 6, 9". Here, when dividing the input space vector by a domain that is separated by the each intermediate voltage phase and the six sectors shown in Fig. 3 and redefining them, they are a twelve-part split sector as shown in Fig. 9, and a switching table of this case is shown in a table in Fig. 10 and in a table in Fig. 11. In Fig. 9, each subscript of the twelve parts of the input sector means the intermediate phase, and for example, if it is 1s, S phase is the intermediate phase in the sector 1.

Consequently, in the present embodiment, since the zero-voltage vector is set by using the intermediate voltage phase in the each sector, the noise reduction by the reduction of the common mode voltage and a prevention of malfunction etc. can be realized, and also the number of times of switching of the switch in the sector can be minimized.

(Embodiment 6)

There is the degree of freedom in a transition state which switches the bidirectional switch during a duty period Z in which the zero-voltage vector is output, and three sets of "1, 4, 7" that connects all of the output UVW phases to R phase, "2, 5, 8" that connects all of the output UVW phases to S phase, and "3, 6, 9" that connects all of the output UVW phases to T phase, exist. An example of this degree of freedom will be explained with reference to a table in Fig. 12. For instance, assuming that the space vector exists in a state "1-1" of the input sector 1 and also the output sector 1 in Fig. 3, when considering an order in which the number of times of switching of the switch is minimized by using the above three zero-voltage vectors in this case, there remain six patterns shown in the table in Fig. 12 as a possible pattern.

Here, in the table in Fig. 12, five synthesized duty pulses are described in five rows, and this means that the switches are switched in an order from an upper row. Depending on the pattern, the meaning of the duty pulse of the each row is different. Patterns P1 ∼ P6 perform a reverse symmetry switching normally by using any one of three sets of combination (P1, P2), (P3, P4) and (P5, P6). That is, if the combination of (P1, P2) is selected, the switching of the bidirectional switch and the update of the on-duty pulse command are performed in such an order as "1, 5, 8" → "1, 5, 7" → "1, 4, 7" → "1, 6, 7" → "1, 6, 9" → (update) → "1, 6, 9" → "1, 6, 7" → "1, 4, 7" → "1, 5, 7" → "1, 5, 8" → (update) ···. As is clear also from any pattern, since the switching of the bidirectional switch is performed surely by one phase, the switching of the two or more bidirectional switches is not simultaneously performed. Here, (P1, P2) is a pattern that uses R phase "1, 4, 7" for the zero-voltage, (P3, P4) is a pattern that uses S phase "2, 5, 8" for the zero-voltage and (P5, P6) is a pattern that uses T phase "3, 6, 9" for the zero-voltage.

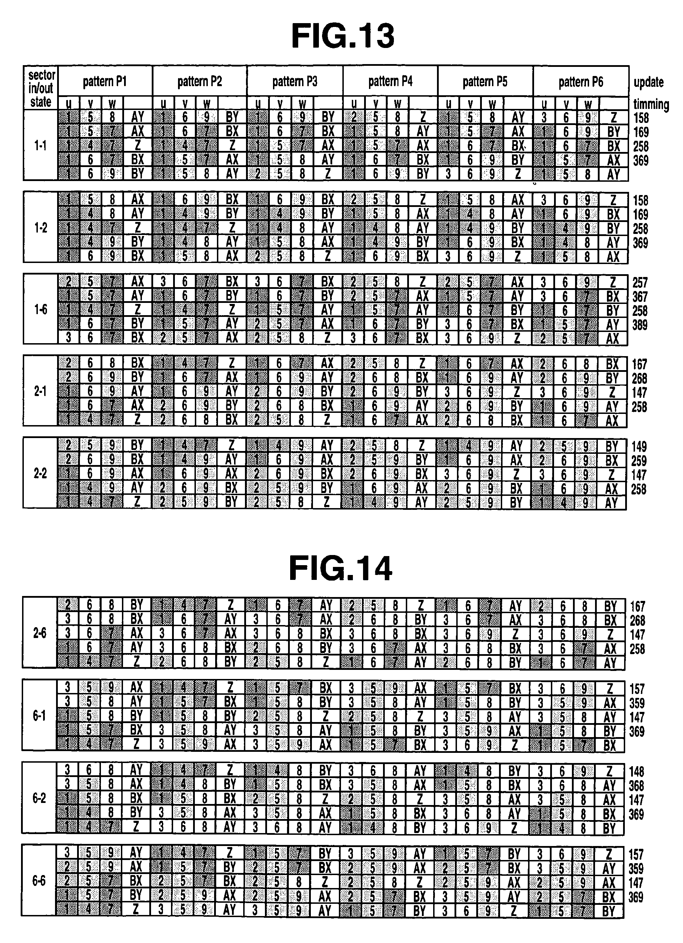

Now, the instant of the inter-sector shift is considered. Since the input current command vector operates in synchronization with the power supply voltage, the sector also shifts as 1 → 2 → 3 → 4 → 5 → 6 → 1 → ···. On the other hand, since the output current command vector is dependent on the line voltage command, also a reverse rotation or rapid rotation might occur. Taking account of an input and output sector simultaneous shift and the reverse rotation too, a state that could shift from the sector state "1-1" can be five of "1-2", "1-6", "2-1", "2-2" and "2-6". Conversely, a state that could shift to the sector state "1-1" can be five of "6-1", "6-6", "6-2", "1-6" and "1-2". On the basis of this shift, in a table in Fig. 13 and a table in Fig. 14, the switching patterns of the sector state relative to a before/after-shiftstate of "1-1" are excerpted and shown. Although the each state of the bidirectional switch at the timing when the sector is updated can take on four states (shown on a right-hand side outside the tables in Figs 13 and 14), it is preferable that the sector shift so that the bidirectional switches of the two phases or more are not simultaneously switched when shifting to the other sectors. Thus, the before-sector-shift bidirectional switch state (patterns former P1 ∼ former P6) is grasped in advance, and then it is judged which state of the after-sector-shift bidirectional switch state (patterns latter P1 ∼ latter P6) the state should shift. As an after-shift pattern determining condition, the pattern by which the two or more phases are not simultaneously switched is selected. In a case where there are a plurality of selectable patterns, such a condition that the pattern of the zero-voltage vector in which the input intermediate voltage phase is connected for the sake of reducing the common mode voltage is given a priority and is used, is given. However, a detailed sector discrimination is required, for example, since a domain of θ > 0 in the sector "1-1" has a relationship of R > S > T, the intermediate voltage phase becomes S phase, then the pattern containing the zero-voltage vector of "2, 5, 8" is selected.

Also in the other shift conditions of the inter-sector shift, by performing the same operation, as long as the AC-AC direct conversion device is in steady-state operation, it is possible to prevent the simultaneous switching of two phases or more of the bidirectional switch at the transition of the inter-sector shift, under the condition where the inter-sector shift may occur.

According to the present embodiment, in addition to the minimization of the number of times of switching of the switch in the same sector, the two or more phases are not simultaneously switched even at the time of the switching of the switch at the instant when the sector shifts. Therefore, a further prevention of the harmonics and a further reduction of the loss can be realized.

(Embodiment 7)

When using the method of the above embodiment 6, the table that prevents the simultaneous switching of two phases or more can be actively selected according to the state. However, depending on the inter-sector shift condition, there is also a case where the table that prevents the simultaneous switching of two phases or more of the switch cannot be selected. For instance, in the table in Fig. 13 and in the table in Fig. 14, in the case where the state shifts from the sector "1-1" to the five states of "1-2", "1-6", "2-1", "2-2" and "2-6", when the switch state at the update is "3, 6, 9" and also the state shifts to the sectors "2-1", "2-2" and "2-6", there is no switching pattern that can prevent the simultaneous switching of two phases or more of the switch after the shift. Therefore, to eliminate the possibility that the bidirectional switches will be simultaneously switched at two phases or more, the duty update in the switch state "3, 6, 9" is prohibited (for only in steady operation state).

In the case where the AC-AC direct conversion device is in steady operation, as described in the embodiment 6, since the order of the inter-sector shift can be predicted to a certain extent, the pattern of next inter-sector shift is also limited (if the device is in steady operation, the shift destination is limited to the five sector states). By using this prediction, an operation is given so that the operation is not performed by using the pattern having the possibility of the above simultaneous switching of two phases or more. In the example of the table in Fig. 13 and the table in Fig. 14, in a case where the switching operation of the bidirectional switch is performed with a mode (the pattern P6) containing "3, 6, 9" under "1-1", an operation by which the pattern shifts to the pattern which does not contain "3, 6, 9" instantly at the timing when the next sector is updated (i.e. when becoming the state "1, 5, 8") and does not involve the switching of the switch (in this example, to the pattern P1) in the sector, is given. Also in a case where the switching of the switch occurs from the other sector state to the mode containing "3, 6, 9", since the state escapes a prohibition mode at the next duty update cycle, the table that prevents the simultaneous switching of two phases or more can always be selected (for only in steady operation state).

In the embodiment 6, the table that prevents the simultaneous switching of two phases or more is selected from among the six variety of tables of the after-sector-shift. However, depending on the shift condition, there is a case where no selectable table exists. In the present embodiment, by narrowing the sectors to the sector that is predicted to shift between the sectors under the steady operation in advance, the switching pattern, which should be prohibited, of the before-shift (i.e. such a switch state that the table cannot be selected whenshifting)isdetermined,thenthe prohibition pattern is avoided. With this, as long as the device is in the steady operation, any sector shift pattern can prevent the simultaneous switching of two phases or more.

(Embodiment 8)

Although the above embodiments 6 and 7 are the methods that prevent also the simultaneous switching at the transition of the inter-sector shift with consideration given only to the minimization of the number of times of switching of the switch of the two phases or more, consideration concerning the reduction of the common mode voltage is not given clearly.

For example, when θ < 0° in the sector "1-1" (when the input is 1t and the output is 1 in Fig. 9), the input phase voltage has a relationship of R > T > S. Thus, in view of the reduction of the common mode voltage, it is preferable to select the zero-voltage vector of T phase "3, 6, 9" which is the intermediate phase. However, according to the prohibition mode avoidance method of the embodiment 7, because "3, 6, 9" is not allowed to be contained in the sector "1-1", a contradiction arises. As a method that satisfies the both, in the present embodiment, on the basis of the method of the embodiment 6, in the case of the mode of the pattern (P5, P6) containing "3, 6, 9" in the sector "1-1" in the table in Fig. 13 and the table in Fig. 14, such an operation that the update is not performed in the state in which the bidirectional switches are "3, 6, 9" and skipped then the duty is updated when returning to "1, 5, 8" by the reverse symmetry method, is added.

According to the present embodiment, depending on the state of the switch, there is a possibility that one operating cycle will be skipped. Thus, as compared with the method of the embodiment 6, although there is a case where the timing when the duty is updated entails a delay that is greater than or equal to one operating cycle and less than two update cycles, the effect of the reduction of the common mode voltage of the embodiment 5 and the prevention of the simultaneous switching of two phases or more at the transition of the sector shift of the embodiment 6, can be satisfied.

### BRIEF DESCRIPTION OF THE DRAWINGS

[FIGURE 1] An equivalent circuit diagram of an AC-AC direct conversion device of a virtual DC link type

[FIGURE 2] Tables of a switching pattern of a virtual conversion device

[FIGURE 3] Space vector sectors and base vector diagrams

[FIGURE 4] A table of synthesized result of the virtual switching pattern

[FIGURE 5] A table of twenty-seven patterns of a switching mode

[FIGURE 6] Relationship diagrams between the vector and a duty, of an input and an output

[FIGURE 7] A drawing of a pulse generation period in one switching cycle

[FIGURE 8] Tables of synthesized duty allocation order in each sector state

[FIGURE 9] A drawing of a twelve-part split space vector sector and base vector

[FIGURE 10] Tables (1^{st} table) of a synthesized result of the virtual switching pattern in the twelve parts

[FIGURE 11] Tables (2^{nd} table) of a synthesized result of the virtual switching pattern in the twelve parts

[FIGURE 12] Pulse patterns in a sector state "I-I"

[FIGURE 13] Pulse patterns (1^{st} table) relative to the sector state "I-I"

[FIGURE 14] Pulse patterns (2^{nd} table) relative to the sector state "I-I"

[FIGURE 15] Basic configuration diagram of an AC-AC direct conversion device

## Claims

1. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
selecting the switching pattern of the zero-voltage vector so that one phase is not changed at any time in an arbitrary switching cycle, for the synthesized switching pattern; and
bringing this state closer to a two phase modulation state.

2. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
setting a duty pulse of current and voltage space vectors, which performs a PWM control at the command of a duty of the each base vector, to an allocation order in which the two or more bidirectional switches are not simultaneously switched.

3. The method for creating the switching pattern as claimed in claim 2, wherein:
the zero-voltage vector is determined from input sector information, and the allocation order is determined according to even number/odd number judge information of input and output sector information.

4. The method for creating the switching pattern as claimed in claim 2 or 3, wherein:
the allocation order of the duty command pulse is reversed every update timing of the duty command.

5. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
setting the zero-voltage vector with an intermediate voltage phase of an input phase voltage (a power supply phase voltage) of an AC-AC direct conversion circuit being the reference; and
determining the switching pattern of the zero-voltage vector to reduce a common mode voltage with an input space vector divided into twelve.

6. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
performing a switching of the bidirectional switch by one phase when an input current command vector shifts between sectors of a space vector on an input side or when an output voltage command vector shifts between sectors of a space vector on an output side, for preventing a simultaneous switching of two phases or more.

7. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
changing a switching table according to a transition state which switches the bidirectional switch, by using degree of freedom of a combination of the zero-voltage vector, for preventing a simultaneous switching of two phases or more at a time of an inter-sector shift.

8. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
previously limiting a sector of the base vector, which shifts next, to five patterns and then predicting the five patterns under a steady operating condition; and
changing a present pattern in advance to such a switching state of the switch that a simultaneous switching of the bidirectional switch at two phases or more can be prevented when shifting to the five patterns.

9. Amethod for creating a switching pattern in an n-phase AC-AC direct conversion device, wherein a virtual input converter creates a switching pattern by combining base vectors of 2n by which mutually different arbitrary input phases are connected to a P-side and an N-side of a virtual DC link and zero-voltage vectors of n by which same phases are connected to the P-side and N-side, and a virtual output inverter creates a switching pattern by using 2+2n variety of base vectors including two zero-voltage vectors, then the n-phase AC-AC direct conversion device controls each bidirectional switch by a synthesized switching pattern of the respective switching patterns of the virtual input converter and the virtual output inverter, the method comprising:
when the bidirectional switch is in a state in which two or more phases are simultaneously switched at a timing when an arbitrary duty is updated between sectors, postponing the update of the duty of that instant; and
performing the update of the duty at a next update timing in a state of the bidirectional switch in which the two or more phases are not simultaneously switched, for preventing the simultaneous switching of the switch.
